# EUROPÄISCHE PATENTSCHRIFT

(11) **EP 2 454 578 B1**
(45) Veröffentlichungstag und Bekanntmachung des Hinweises auf die Patenterteilung: **29.01.2014**
(21) Anmeldenummer: 10730755.5
(22) Anmeldetag: 01.07.2010
(51) Int. Cl.: G01N 3/30

(54) **VERFAHREN UND VORRICHTUNG ZUR DURCHFÜHRUNG EINES FUNKTIONS- UND/ODER FESTIGKEITSTESTES EINER BATTERIE**
METHOD AND DEVICE FOR PERFORMING A FUNCTIONAL AND/OR STRENGTH TEST ON A BATTERY
PROCÉDÉ ET DISPOSITIF PERMETTANT D'EFFECTUER UN ESSAI DE FONCTIONNEMENT ET/OU DE RÉSISTANCE D'UNE BATTERIE

(30) Priorität: 08.07.2009 DE 102009027515
(43) Veröffentlichungstag der Anmeldung: 23.05.2012
(73) Patentinhaber: Samsung SDI Co., Ltd., Gyeonggi-do (KR); Robert Bosch GmbH, 70442 Stuttgart (DE)
(72) Erfinder: DALLINGER, Frank, 70499 Stuttgart (DE); REITZLE, Alexander, 89231 Neu-Ulm (DE); KERN, Rainer, 70174 Stuttgart (DE)
(74) Vertreter: Bee, Joachim
(86) Internationale Anmeldenummer: PCT/EP2010/059334
(87) Internationale Veröffentlichungsnummer: WO 2011/003797

(56) Entgegenhaltungen:
- DE-A1- 19 904 448
- US-A- 3 888 814
- US-A- 4 380 926
- US-A- 4 402 228

## Beschreibung

### Stand der Technik

Zur Festigkeits- und Funktionsüberprüfung von Batterien, insbesondere von Batterien, die als Antriebsenergieressource in Kraftfahrzeugen angewendet werden sollen, werden üblicherweise Falltests durchgeführt. In einem derartigen, anerkannten Test muss zum Beispiel eine Batterie aus einer Höhe von 10 m auf einen definierten Körper fallen. Mittels Sensoren werden Messungen unterschiedlicher chemischer, physikalischer und gegebenenfalls elektrischer Parameter an und in der Umgebung der Batterie vollzogen. Durch den Aufprall der Batterie kann es sein, dass diese mehrere Meter vom Aufprallort weggeschleudert wird. Aufgrund von Beschädigungen der Batterie kann es dazu kommen, dass erhebliche Mengen von chemischem Material aus der Batterie freigesetzt werden und den Prüfbereich verunreinigen. Die Verunreinigungen können zur chemischen Kontamination des Prüfbereiches führen sowie zu einer Erhöhung der Brandgefahr. Außerdem erweist sich die Messung mittels Sensoren nach erfolgtem Aufprall aufwändig, da die Position der Batterie nach dem Abprallen nicht vorhersehbar ist und demzufolge die Gefahr der Störung bzw. ungenauen Übermittlung von vom Sensor ermittelten Signalen gegeben ist. Es sind daher bei den Falltests keine ortsfesten Sensoren einsetzbar, so dass auf kostspielige Messeinrichtungen, wie zum Beispiel Thermokameras, zurückgegriffen werden muss. Des Weiteren ist beim Falltest nachteilig, da aufgrund unbestimmter Aerodynamik beim freien Fall der Auftreffpunkt der Batterie nicht exakt definierbar ist, so dass auch eine Wiederholbarkeit des Falltestes fraglich ist.

Bekannte Festigkeitstesteinrichtungen für Batterien sind z.B. aus US 3,888,814, US 4,402,228 oder aus US 4,380,926 bekannt.

Aufgrund des notwendigen Einsatzes von mobiler Sensorik, aufgrund des unbestimmten Ruhepunktes der Batterie nach dem Aufprall, muss die Messwerterfassung durch den Sensor zum Teil aus mehreren Metern Distanz erfolgen. Dies hat einen erheblichen Einfluss auf die Ungenauigkeit der Messergebnisse. Zudem ist die mobile Sensorik in Anschaffung und Wartung relativ kostenintensiv. Außerdem birgt der Falltest den Nachteil, dass nach dem Aufprall der Batterie diese aufgrund eines zumindest teilweise elastischen Verhaltens abprallt und dadurch gegebenenfalls einem oder mehreren weiteren Impulsen ausgesetzt ist. Das heißt, dass sie im Nachhinein nur schwer nachvollziehbar ist, welche Beschädigungen oder ermittelten Messwerte auf dem ursprünglichen, gewünschten Impuls oder einem der nachfolgenden Impulse basieren.

Eine gegebenenfalls gewünschte elektrische Kontaktierung des Prüflings bzw. der Batterie ist wegen der Steifigkeit von Leitermaterial nicht möglich.

Durch die relativ große erforderliche Höhe zur Durchführung des Falltestes und die damit verbundene Größe der gesamten Testeinrichtung, verbunden mit der häufig auftretenden Kontamination bzw. Verunreinigung der Einrichtung führt zu hohen Investitions-, Wartungs- und Säuberungskosten.

Der vorliegenden Erfindung liegt daher die Aufgabe zugrunde, ein Verfahren und eine Vorrichtung zur Durchführung eines Funktions- und/oder Festigkeitstests einer Batterie zur Verfügung zu stellen, mit denen in einfacher und kostengünstiger Weise mit einer hohen Wiederholgenauigkeit und Erhalt zuverlässiger Messergebnisse Batterien getestet werden können.

### Offenbarung der Erfindung

Die Aufgabe wird durch ein Verfahren zur Durchführung eines Funktions- und/oder Festigkeitstests einer Batterie nach Anspruch 1 gelöst, insbesondere einer als Antriebsenergieressource in Fahrzeugen dienenden Batterie, bei dem die Batterie wenigstens einen Impuls durch ein schlagartiges Zusammentreffen mit einem Prallkörper ausgesetzt wird, wobei die Batterie in einem im Wesentlichen ruhenden Zustand kinetischer Energie des Prallkörpers schlagartig ausgesetzt wird. Mit dem erfindungsgemäßen Verfahren kann somit weitestgehend ein Transportunfall simuliert werden, bei dem eine Batterie von einer Transporthilfseinrichtung, wie zum Beispiel einer Palette, herabfällt. Der Funktions- und/oder Festigkeitstest bezieht sich dabei auf die Erfassung batteriefunktionsrelevanter Größen und/oder auf die Festigkeit des Batteriekörpers. Es können daraus Schlussfolgerungen für gesundheitliche Schädigungen oder Umweltschädigungen gezogen werden. Erfindungsgemäß weist die Batterie bei Durchführung des Verfahrens keine kinetische Energie auf, sondern befindet sich im ruhenden Zustand. Lediglich der Prallkörper hat aufgrund einer relativ hohen Geschwindigkeit und seiner Masse kinetischer Energie, die mit einem Impuls auf die Batterie einwirkt. Das heißt, dass im Gegensatz zum aus dem Stand der Technik bekannten Falltest sich der Prallkörper auf die Batterie zu bewegt und nicht umgekehrt. Wichtig dabei ist, dass der Prallkörper eine wesentlich größere Geschwindigkeit vor dem Aufprall aufweist als die Batterie. Das heißt, dass das erfindungsgemäße Verfahren im Wesentlichen unter den Bedingungen des Falltests vollzogen wird, wobei allerdings auf die Bewegung der Batterie verzichtet wird. Der Prüfling bzw. die Batterie kann somit nahezu ortsfest vermessen werden und der Auftreffpunkt des Prallkörpers auf die Batterie ist exakt definiert. Es ist dabei sogar möglich, die Batterie in Betrieb zu setzen und elektrisch kontaktiert zu messen bzw. zu prüfen. Die Sensorik zur Messung bzw. Prüfung kann ortsfest angeordnet werden und ist somit kostengünstiger als die im Falltest anzuwendenden Messanordnungen. Die Messungen können genauer vollzogen werden. Das erfindungsgemäße Verfahren ist kostengünstiger realisierbar, da es in einer Ebene vollzogen werden kann und somit nicht die große Fallhöhe im Falltest benötigt wird.

Zur Realisierung eines ausreichenden Impulses ist der Prallkörper beim Aufprall auf die Batterie auf eine Geschwindigkeit von 30 km/h bis 70 km/h zu beschleunigen. Insbesondere hat sich dabei eine Geschwindigkeit von ca. 50 km/h bewährt. Die Bewegung des Prallkörpers kann dabei translatorisch oder rotatorisch um eine Außerhalb des Prallkörpers angeordnete Achse erfolgen. Wichtig dabei ist, dass der Aufprall des Prallkörpers auf die Batterie im Wesentlich linear vollzogen wird. Der zum Test der Batterie verwendete Impuls hängt wesentlich von der Masse und der Geschwindigkeit des beschleunigten Körpers auf einen feststehenden Körper ab. Das heißt, um einen Impuls in der Größenordnung wie beim Auftreffen nach einem Fall aus 10 m Höhe zu simulieren, lässt sich wenigstens eine der beiden Größen Masse oder Geschwindigkeit variieren. Bei Verkleinerung der Masse des Prallköpers muss eine umso höhere Geschwindigkeit des Prallkörpers gewählt werden und umgekehrt.

Vorteilhafterweise ist vorgesehen, dass die Batterie durch den Aufprall des Prallkörpers bewegt wird. Das heißt, dass die Batterie nicht auf einer Unterlage fixiert sein sollte, sondern sich relativ zu dieser verschieben kann. Diese freie Bewegungsmöglichkeit verspricht dabei weitgehend der Situation nach einem möglichen teil-elastischen Abprallen einer Batterie beim Fallversuch.

Damit die Batterie dabei nicht unkontrolliert abprallt, ist vorgesehen, dass sie mittels ihrer kinetischen Energie bei der Bewegung ein Verformungselement verformt. Die Verformung des Verformungselements kann dabei plastisch oder zumindest teil-elastisch sein und dient zur Aufnahme der Bewegungsenergie der Batterie, nachdem sie dem Stoß des Prallkörpers ausgesetzt wurde. Alternativ hinzukommend lassen sich auch Bremsen an der Batterie einsetzen, wobei dabei eine Umwandlung der kinetischen Energie der Batterie in Wärmeenergie erfolgt. Der Vorteil der Ausgestaltung mit Verformungselement besteht insbesondere darin, dass die Batterie nicht nach dem Abprallen einem zweiten oder mehreren harten Stößen ausgesetzt ist, sondern nach dem ersten Impuls abgefedert wird, so dass davon ausgegangen werden kann, dass sämtliche Verformungen oder Funktionsbeeinträchtigungen der Batterie vom Stoß des Prallkörpers herrühren müssen. Durch die Aufnahme von zumindest eines Anteils der kinetischen Energie des Verformungselements wird die Batterie an einer relativ bestimmten Position wieder in Ruhelage gebracht, so dass Sensoren entsprechend angeordnet oder angesteuert sein können, die entweder auf die Position der Batterie in Ruhelage nach dem Stoß gerichtet sind oder derart eingerichtet sind, dass sie die relativ kurze Bewegung der Batterie von der Ruhelage vor dem Stoß in die Ruhelage nach dem Stoß mitmachen können. Ein solches Verformungselement kann zum Beispiel ein Schaumstoffpolster sein. Alternativ lassen sich auch Schraubenfedern, die als Druckfedern ausgestaltet sind, einsetzten.

Erfindungsgemäß ist des Weiteren vorgesehen, dass während des Tests die Temperatur der Batterie innerhalb und/oder an wenigstens einer Außenwand des Batteriegehäuses gemessen wird und/oder die von der Batterie zur Verfügung gestellte Spannung gemessen wird und/oder in der Umgebung der Batterie vorhandene Gase analysiert werden.

Das Verfahren kann insbesondere derart durchgeführt werden, dass die Batterie im betriebsbereiten Zustand dem Impuls des Prallkörpers ausgesetzt wird. Das heißt, dass die Batterie im elektrisch kontaktierten Zustand geprüft und gemessen werden kann. Dies ist ein wesentlicher Vorteil im Vergleich zum herkömmlichen Falltest, da bei diesen aufgrund des unbestimmten Ruheortes der Batterie nach dem Impuls bzw. unkontrollierten Bewegungen der Batterie keine Leitungen an die Batteriekontakte anschließbar waren.

Die vorliegende Aufgabe wird außerdem erfindungsgemäß durch eine Vorrichtung zur Durchführung eines Funktions- und/oder Festigkeitstes einer Batterie nach Anspruch 4 erfüllt, die eine Beschleunigungseinrichtung zur Beschleunigung des Prallkörpers sowie eine auf eine Unterlage aufgestellte Aufnahme für die Batterie umfasst, auf der die Batterie ruhend positionierbar oder positioniert ist. Insbesondere ist die erfindungsgemäße Vorrichtung zur Durchführung des erfindungsgemäßen Verfahrens geeignet. Wie erwähnt, kann die Beschleunigungseinrichtung dabei eine rotatorische oder translatorische Bewegung des Prallkörpers erzeugen, wobei die Impulswirkrichtung auf die Batterie im Wesentlichen linear sein sollte.

Vorteilhafterweise ist vorgesehen, dass die Aufnahme für die Batterie reibungsminimiert auf der Unterlage aufgestellt ist. Dies kann zum Beispiel mittels Räder oder Rollen erfolgen, die eine leichte Verschiebung auf der Aufnahme der Unterlage ermöglichen. Es sind somit weitgehend Bedingungen wie beim Fallversuch herstellbar. Anzustreben ist dabei eine größtmögliche Haft-, Gleit- und/oder Rollreibungsminimierung.

Zur weiteren Nachbildung des Falltests ist vorgesehen, dass die Batterie eine Trägheit aufweist, die maximal ein Zwölftel bis ein Siebentel der Trägheit der Batterie entspricht. Das heißt, dass anzustreben ist, dass die Trägheit bzw. die Masse der Aufnahme für die Batterie so gering wie möglich ist. Ein vorteilhaftes Verhältnis der Massen der Aufnahme zu der Masse der Batterie beträgt 1:10.

Zur Erzeugung eines ähnlichen Impulses wie beim Falltest ist vorzusehen, dass das Verhältnis der Masse der Batterie zur Masse des Prallkörpers ein Fünfzehntel bis ein Siebentel beträgt. Auch hier beträgt ein bevorzugtes Verhältnis 1:10. Insbesondere kann vorgesehen sein, dass die Masse des Prallkörpers 5000 kg beträgt. Ein derartig schwerer Prallkörper kann bei Einhaltung der als erfindungsgemäß angegebenen Geschwindigkeitswerte auf eine ca. 500 kg schwere Batterie denselben Impuls bewirken, wie er beim Falltest auf eine ähnlich schwere Batterie einwirkt.

Der Prallkörper ist vorzugsweise derart ausgebildet, dass er ein im Wesentlichen stangenförmiges Penetrationselement und eine in Impulswirkrichtung davor angeordnete Massenkonzentration umfasst. Der Durchmesser des stangenförmigen Penetrationselementes sollte dabei ca. 150 mm betragen. Es bietet sich an, das Penetrationselement aus Stahl zu fertigen. Bevorzugt sollte das Penetrationselement gemäß Falltest-Richtlinien ausgestaltet sein.

Die erfindungsgemäße Vorrichtung umfasst vorteilhafterweise wenigstens eine Positionierungshilfe zur Definition der Position der Batterie vor der Impulsbeaufschlagung, wobei die Position der Batterie derart eingerichtet ist, dass die Batterie nach Impulsbeaufschlagung in Impulswirkrichtung verschiebbar ist. Dadurch ergibt sich neben der Realisierung der Möglichkeit des Abprallens der Batterie vom Penetrationselement nach dem Stoß der weitere Vorteil der exakten Positionierung der Batterie im Bezug zur Beschleunigungseinrichtung, so dass das Auftreffen des Prallkörpers stets mit derselben, vorgegebenen Geschwindigkeit realisierbar ist. Dies erhöht somit wesentlich die Wiederholbarkeit des Tests.

Zur Aufnahme der kinetischen Energie der Batterie nach dem vom Prallkörper ausgelösten Impuls dient zur Definition der Position der Batterie nach dem Aufprall (Ruhepunkt) und somit zur Erleichterung bzw. Ermöglichung verschiedener Messungen ein in Impulswirkrichtung hinter der Batterie angeordnetes Verformungselement. Alternativ oder hinzukommend, lassen sich Bremsen an der Batterie bzw. an einer Batterie aufnehmenden Aufnahme anordnen.

Vorzugsweise sollte dabei die Batterie zu dem Verformungselement vor dem Aufprall mit 50 bis 500 mm beabstandet sein. Bei Einhaltung der als bevorzugt angegebenen Geschwindigkeits- und Massegrößen sollte der Abstand zwischen Batterie und Verformungselement ca. 100 mm betragen. Das bedeutet, dass die Batterie nach dem Aufprall zunächst vor Kontaktierung des Verformungselementes sich relativ frei bewegen kann, womit der Vorgang des Abprallens im Falltest entsprochen wird.

Zur Realisierung eines definierten Stoßes und zur Verringerung von Verschleiß an der erfindungsgemäßen Vorrichtung ist vorgesehen, dass das Penetrationselement auf einer ideellen, parallel zur Impulswirkrichtung verlaufenden Achse angeordnet ist, die im Wesentlichen durch die Schwerpunkte des Prallkörpers sowie der Batterie verläuft.

In einer weiteren vorteilhaften Ausgestaltung ist vorgesehen, dass die Vorrichtung wenigstens einen Anschlag aufweist zur Definition des Endpunktes der Bewegung des Prallkörpers, wobei der Endpunkt derart eingestellt ist, dass der Prallkörper in diesem Endpunkt zwischen 5 bis 30 mm in Impulswirkrichtung über die Ruhelage der Batterie hinausragt. Durch die Verschiebbarkeit der Batterie ergibt sich eine entsprechende Verschiebung und/oder Deformation der Batterie.

Die Beschleunigungsseinrichtung zur Beschleunigung des Prallkörpers kann Schienen umfassen, auf denen der Prallkörper beschleunigt und verfahren wird. In Abhängigkeit von der gewünschten Beschleunigung bzw. Endgeschwindigkeit sollte der Verfahrweg dabei 10 bis 40 m sein.

Die vorliegende Erfindung weist somit die Vorteile auf, dass der Auftreffpunkt des Impulses exakt definiert ist, Mess-Sensorik ortsfest angeordnet werden kann und daher preiswert realisierbar ist und genauere bzw. störunanfällige Messwerte erbringen kann. Die Bewegungsrichtung der Batterie nach dem Aufprall ist exakt vorherbestimmbar und kann durch das Verformungselement und/oder Bremsen abgebremst werden, wodurch der Ruhepunkt nach dem Aufprall exakt definierbar ist. Durch die Beweglichkeit der Batterie nach dem Aufprall in einem translatorischen Freiheitsgrad kann das Abprallen, welches beim Falltest auftritt, simuliert werden. Gegenüber dem Falltest ergibt sich hierbei der Vorteil, dass auch die Aufstellung der Batterie auf einer Unterlage, wie es im Transportfall realisiert werden würde, simuliert werden kann. Aufgrund des relativ Verschiebungsweges sowie der definierten Ruhelage nach dem Aufprall kann die Batterie mit elektrischer Kontaktierung und somit im betriebsbereiten Zustand getestet werden.

Die vorliegende Erfindung wird anhand der beiliegenden Zeichnungen erläutert.

Es zeigt dabei
- Figur 1:: eine erfindungsgemäße Vorrichtung in Ansicht von der Seite vor dem Aufprall,
- Figur 2:: die erfindungsgemäße Vorrichtung in Ansicht von der Seite nach dem Aufprall.

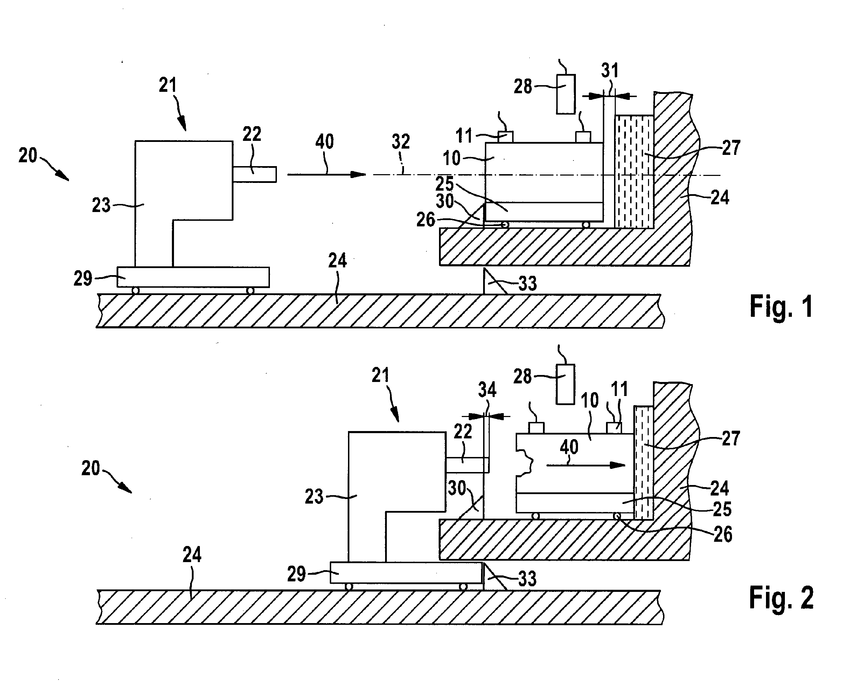

Es wird zunächst Bezug genommen auf Figur 1. Die erfindungsgemäße Vorrichtung 20 umfasst einen Prallkörper 21, der wiederum eine Massenkonzentration 23 sowie ein daran angeordnetes Penetrationselement 22 umfasst. Der Prallkörper 21 ist dabei auf eine Beschleunigungseinrichtung 29 aufgestellt, die wiederum auf einer Unterlage 24 verfahrbar ist. Aus Gründen der Übersichtlichkeit wurde auf Details der Beschleunigungseinrichtung wie zum Beispiel Antriebseinrichtung und Schienen in der Darstellung verzichtet. Gegenüberliegend ist auf einer Aufnahme 25 die Batterie 10 angeordnet. Die Aufnahme 25 ist ebenfalls auf Rädern 26 auf der Unterlage 24 aufgestellt. Dabei muss die Unterlage 24 nicht, wie in den Figuren 1 und 2 dargestellt, auf unterschiedlichen Höhenniveaus eingerichtet sein, sondern es kann abweichend davon vorgesehen sein, dass die Unterlage 24 in einer Ebene angeordnet ist.

In Impulswirkrichtung 40, hinter der Batterie 10 angeordnet, befindet sich ein Verformungselement 27, welches mit einem Abstand 31 zur Batterie 10 angeordnet ist. Dieser Abstand 31 ergibt sich durch die Anlage der Batterie 10 an der Positionierungshilfe 30. Über der Batterie 10 ist ein Sensor 28 angedeutet, wobei die vorliegende Erfindung nicht auf nur einen, beabstandeten zur Batterie 10 angeordneten Sensor 28 eingeschränkt ist, sondern mehrere Sensoren, gegebenenfalls auch an oder in der Batterie 10 angeordnet sein können. Es ist ersichtlich, dass sich die Schwerpunkte der Massenkonzentration 23 des Penetrationselementes 22 sowie der Batterie 10 im Wesentlichen auf einer gemeinsam, ideellen Achse 32 befinden.

Wie erwähnt, kann die Batterie auch im betriebsbereiten Zustand dem Test unterzogen werden. Zur Messung der Spannung vor und nach dem Aufprall können zu diesem Zweck an die Batterie Kontakte 11 entsprechende Messleitungen angeschlossen sein, wie in Figuren 1 und 2 angedeutet.

Durch Beschleunigung des Prallkörpers 21 prallt dieser mit einer bestimmten Geschwindigkeit auf die Batterie 10 auf, so dass sich diese, wie in Figur 2 dargestellt, von der Positionierungshilfe 30 löst und gegen das Verformungselement 27 fährt, welches sich bei ausreichender Elastizität oder plastischer Verformbarkeit, wie in Figur 2 angedeutet, zusammendrückt. Die Beschleunigungseinrichtung 29 kommt dabei an einem Anschlag 33 auf der Unterlage 24 zur Ruhe. Die Position des Anschlages 33 ist dabei derart eingestellt, dass das Penetrationselement 22 mit einem geringen Maß des Überstandes 34 in Impulswirkrichtung 40 über die Positionierungshilfe 30 hinausragt und somit den Impuls auf die Batterie 10 bewirkt. Dabei kann gegebenenfalls die in Figur 2 angedeutete Beschädigung der Batterie 10 auftreten.

Ersichtlich ist, dass die Batterie 10 sich nur einen geringen Weg, nämlich den Abstand 31 sowie einen bestimmten Verformungsweg zur Verformung des Verformungselementes 27 bewegt hat und anschließend bereits in einen ruhenden Zustand gebracht wurde. Der Sensor 28 befindet sich somit immer noch im Wesentlichen über der Batterie 10 und kann zum Beispiel zur Analyse oder Messung von Gasen oder Temperaturen verwendet werden. Durch die Aufnahme von kinetischer Energie der Batterie im Verformungselement prallt die Batterie nicht unkontrolliert ab, so dass bei jedem Test nur ein Impuls auf die Batterie gerichtet ist.

Insgesamt lässt sich mit der vorliegenden erfindungsgemäßen Vorrichtung und dem erfindungsgemäßen Verfahren somit ein in einfacher und kostengünstiger Weise und hinsichtlich der Messergebnisse zuverlässiges Verfahren zum Testen der Funktionalität und Festigkeit einer Batterie nach einem, einem Sturz aus relativ großer Höhe vergleichbarem Test vollziehen.

## Patentansprüche

1. Verfahren zur Durchführung eines Funktions- und/ oder Festigkeitstestes einer Batterie, insbesondere einer als Antriebsenergieressource in Fahrzeugen dienenden Batterie, bei dem die Batterie wenigstens einem Impuls durch ein schlagartiges Zusammentreffen mit einem Prallkörper ausgesetzt wird,
wobei die Batterie in einem ruhenden Zustand kinetischer Energie des Prallkörpers schlagartig ausgesetzt wird,
**dadurch gekennzeichnet,**
**dass** die Batterie durch den Aufprall des Prallkörpers bewegt wird.

2. Verfahren zur Durchführung eines Funktions- und/ oder Festigkeitstestes nach Anspruch 1, **dadurch gekennzeichnet,**
**dass** die Batterie mittels ihrer kinetischen Energie bei der Bewegung ein Verformungselement verformt.

3. Verfahren zur Durchführung eines Funktions- und/ oder Festigkeitstestes nach wenigstens einem der vorhergehenden Ansprüche, **dadurch gekennzeichnet, dass** während des Tests
- die Temperatur der Batterie innerhalb und/ oder an wenigstens einer Außenwand des Batteriegehäuses gemessen wird, und / oder
- die von der Batterie zur Verfügung gestellte Spannung gemessen wird, und/ oder
- in der Umgebung der Batterie vorhandene Gase analysiert werden.

4. Vorrichtung zur Durchführung eines Funktions- und/ oder Festigkeitstestes einer Batterie, insbesondere zur Durchführung des Verfahrens gemäß wenigstens einem der Ansprüche 1-3, **dadurch gekennzeichnet,**
**dass** die Vorrichtung einen Prallkörper sowie eine Beschleunigungseinrichtung zur Beschleunigung des Prallkörpers und eine auf eine Unterlage aufgestellte Aufnahme für die Batterie umfasst, auf der die Batterie ruhend unfixiert positionierbar oder positioniert ist und einem Impuls des beschleunigten Prallkörpers aussetzbar ist sodaß die Batterie durch den Aufprall des Prallkörpers in Bewegung versetzt wird.

5. Vorrichtung zur Durchführung eines Funktions- und/ oder Festigkeitstestes nach Anspruch 4, **dadurch gekennzeichnet,**
**dass** die Aufnahme für die Batterie reibungsminimiert auf der Unterlage aufgestellt ist.

6. Vorrichtung zur Durchführung eines Funktions- und/ oder Festigkeitstestes nach wenigstens einem der Ansprüche 4 oder 5, **dadurch gekennzeichnet,**
**dass** der Prallkörper wenigstens ein im Wesentlichen stangenförmiges Penetrationselement und eine in Impulswirkrichtung davor angeordnete Massenkonzentration umfasst.

7. Vorrichtung zur Durchführung eines Funktions- und/ oder Festigkeitstestes nach wenigstens einem der Ansprüche 4 bis 6, **dadurch gekennzeichnet,**
**dass** die Vorrichtung wenigstens eine Positionierungshilfe umfasst zur Definition der Position der Batterie vor der Impulsbeaufschlagung, wobei die Position der Batterie derart eingerichtet ist, dass die Batterie nach Impulsbeaufschlagung in Impulswirkrichtung verschiebbar ist.

8. Vorrichtung zur Durchführung eines Funktions- und/ oder Festigkeitstestes nach Anspruch 7, **dadurch gekennzeichnet,**
**dass** die Vorrichtung des weiteren wenigstens ein in lmpulswirkrichtung hinter der Batterie angeordnetes Verformungselement umfasst.

9. Vorrichtung zur Durchführung eines Funktions- und/ oder Festigkeitstestes nach wenigstens einem der Ansprüche 7 bis 8, **dadurch gekennzeichnet,**
**dass** die Vorrichtung wenigstens einen Anschlag aufweist zur Definition des Endpunktes der Bewegung des Prallkörpers.

## Claims

1. Method for performing a functional and/or strength test on a battery, in particular a battery serving as a drive power source in motor vehicles, in which the battery is subjected to at least one impulse by means of an abrupt encounter with an impact body, the battery being subjected abruptly to kinetic energy of the impact body when in a resting state,
**characterized in that**
the battery is moved by the impact of the impact body.

2. Method for performing a functional and/or strength test according to Claim 1, **characterized in that** the battery deforms a deformation element during the movement by means of its kinetic energy.

3. Method for performing a functional and/or strength test according to at least one of the preceding claims, **characterized in that**
during the test
- the temperature of the battery is measured inside and/or on at least one outer wall of the battery housing, and/or
- the voltage provided by the battery is measured, and/or
- gases present in the surroundings of the battery are analysed.

4. Device for performing a functional and/or strength test on a battery, in particular for performing the method according to at least one of Claims 1-3, **characterized in that**
the device comprises an impact body and an acceleration apparatus for accelerating the impact body and a holder for the battery set up on a base, on which the battery is or can be positioned resting unfixed and is subjected to an impulse from the accelerated impact body, so that the battery is set moving as a result of the impact of the impact body.

5. Device for performing a functional and/or strength test according to Claim 4, **characterized in that** the holder for the battery is set up on the base in a manner that minimizes friction.

6. Device for performing a functional and/or strength test according to at least one of Claims 4 and 5, **characterized in that**
the impact body comprises at least one substantially rod-shaped penetration element and a mass concentration arranged in front of the latter in the direction of action of the impulse.

7. Device for performing a functional and/or strength test according to at least one of Claims 4 to 6, **characterized in that**
the device comprises at least one positioning aid to define the position of the battery before the application of the impulse, the position of the battery being set up such that the battery can be displaced in the direction of action of the impulse following the application of the impulse.

8. Device for performing a functional and/or strength test according to Claim 7, **characterized in that** the device further comprises at least one deformation element arranged behind the battery in the direction of action of the impulse.

9. Device for performing a functional and/or strength test according to at least one of Claims 7 to 8, **characterized in that**
the device has at least one stop to define the end point of the movement of the impact body.

## Revendications

1. Procédé permettant de réaliser un essai de fonctionnement et/ou de résistance d'une batterie, notamment d'une batterie servant de source d'énergie d'entraînement dans des véhicules, dans lequel la batterie est soumise à au moins une impulsion provoquée par une rencontre de type coup avec un heurtoir, la batterie étant soumise dans un état de repos à l'énergie cinétique en forme de coup du heurtoir, **caractérisé en ce que** la batterie est déplacée par le coup du heurtoir.

2. Procédé permettant de réaliser un essai de fonctionnement et/ou de résistance selon la revendication 1, **caractérisé en ce que** la batterie déforme un élément de déformation lors du déplacement provoqué par son énergie cinétique.

3. Procédé permettant de réaliser un essai de fonctionnement et/ou de résistance selon au moins l'une quelconque des revendications précédentes, **caractérisé en ce que** pendant l'essai :
- la température de la batterie est mesurée à l'intérieur et/ou au moins contre une paroi extérieure du carter de batterie ; et/ou
- la tension mise à disposition par la batterie est mesurée ; et/ou
- les gaz présents dans l'environnement de la batterie sont analysés.

4. Dispositif permettant de réaliser un essai de fonctionnement et/ou de résistance d'une batterie, notamment de mise en oeuvre du procédé selon au moins l'une quelconque des revendications 1 à 3, **caractérisé en ce que** le dispositif comporte un heurtoir ainsi qu'un dispositif d'accélération servant à accélérer le heurtoir ainsi qu'un logement prévu sur un support pour la batterie, la batterie étant positionnée ou pouvant être positionnée en situation de repos sur ledit support et pouvant être soumise à une impulsion du heurtoir accéléré, de sorte que la batterie est décalée par le déplacement du coup du heurtoir.

5. Dispositif permettant de réaliser un essai de fonctionnement et/ou de résistance selon la revendication 4, **caractérisé en ce que** le logement prévu pour la batterie est équipé sur le support d'un système de réduction des frottements.

6. Dispositif permettant de réaliser un essai de fonctionnement et/ou de résistance selon au moins l'une quelconque des revendications 4 ou 5, **caractérisé en ce que** le heurtoir comprend au moins un élément pénétrant pour l'essentiel en forme de barre et une concentration de masses disposée devant dans la direction d'action de l'impulsion.

7. Dispositif permettant de réaliser un essai de fonctionnement et/ou de résistance selon au moins l'une quelconque des revendications 4 à 6, **caractérisé en ce que** le dispositif comprend au moins un système d'aide au positionnement servant à définir la position de la batterie avant sa sollicitation par l'impulsion, la position de la batterie étant conçue de telle sorte que la batterie peut être coulissée dans la direction d'action de l'impulsion après la sollicitation par l'impulsion.

8. Dispositif permettant de réaliser un essai de fonctionnement et/ou de résistance selon la revendication 7, **caractérisé en ce que** le dispositif comprend en outre au moins un élément de déformation disposé derrière la batterie dans la direction d'action de l'impulsion.

9. Dispositif permettant de réaliser un essai de fonctionnement et/ou de résistance selon au moins l'une quelconque des revendications 7 à 8, **caractérisé en ce que** le dispositif comporte au moins une butée permettant de définir le point terminal du mouvement du heurtoir.
